# EUROPEAN PATENT APPLICATION

(11) **EP 3 120 953 A1**
(43) Date of publication of application: **25.01.2017**
(21) Application number: 15177744.8
(22) Date of filing: 21.07.2015
(51) Int. Cl.: B22F 1/00, B22F 3/105, C22C 19/05

(54) **HIGH TEMPERATURE NICKEL-BASE SUPERALLOY FOR USE IN POWDER BASED MANUFACTURING PROCESS**

(71) Applicant: General Electric Technology GmbH, 5400 Baden (CH)
(72) Inventor: Etter, Thomas, 5037 Muhen (CH); Künzler, Andreas, 5400 Baden (CH); Meidani, Hossein, 5420 Ehrendingen (CH)
(74) Representative: Bernotti, Andrea

(57) **Abstract**

The application relates to the technology of producing three-dimensional articles by means of powder-based additive manufacturing, such as selective laser melting (SLM) or electron beam melting (EBM). Especially, it refers to a Nickel-base superalloy powder on basis of Hastelloy X consisting of the following chemical composition (in wt. -%): 20.5-23.0 Cr, 17.0-20.0 Fe, 8.0-10.0 Mo, 0.50-2.50 Co, 0.20-1.00 W, 0.04-0.10 C, 0-0.5 Si, 0-0.5 Mn, 0-0.008 B, remainder Ni and unavoidable residual elements and wherein the powder has a powder size distribution between 10 and 100 µm and a spherical morphology and the ratio of the content (in wt.-%) of alloying elements C/B is at least 5 or more.

## Description

### BACKGROUND OF THE INVENTION

The present invention relates to the technology of producing three-dimensional articles by means of powder-based additive manufacturing, such as selective laser melting (SLM) or electron beam melting (EBM). Especially, it refers to a high temperature Ni-base superalloy powder based on well-known Hastelloy X with a modified and tightly controlled chemical composition according to claim 1 for manufacturing of nearly crack free articles. Those articles should also have good mechanical high temperature properties for use as gas turbine components.

### PRIOR ART

In general, SLM generated articles have different microstructures compared to cast material of the same alloy. This is primary due to powder based layer-by-layer article production and the inherent high cooling rates due to the high energy beam/ material interaction in these processes. Due to the extremely localized melting and the resulting rapid solidification during SLM, segregation of alloying elements and formation of precipitations is considerably reduced, which results in a decreased sensitivity for cracking compared to conventional build-up welding techniques.

Gamma-prime (γ') precipitation-strengthened nickel-base superalloys with high oxidation resistance and high γ' content comprise usually a combined fraction of Al and Ti of about more than 5 wt.-% and are known to be very difficult to weld because of their micro-crack sensitiveness. Micro-cracking during welding of those superalloys, such as IN738LC, MARM-M 247 or CM247LC is attributed to the liquation of precipitates or low-melting eutectics in the heat affected zone (HAZ), ductility dip cracking (DDC) or strain-age cracking in subsequent heat treatment.

Therefore, mainly solid-solution strengthened (e.g. IN625, Hastelloy X, Haynes 230) or gamma-prime strengthened nickel-base superalloys with only a low amount of Al and Ti (e.g. IN718) are processed by SLM or EBM so far and are considered as weldable.

Hastelloy X is a well- known nickel-base alloy that possesses an exceptional combination of oxidation resistance, fabricability and high-temperature strength and that has excellent forming and welding characteristics (see HASTELLOY^{®} X Alloy, H-3009C, 1997, Haynes International, Inc.). The nominal chemical composition in wt.-% is given as follows:

**Table1: Nominal chemical composition of Hastelloy X**

| Ni | Cr | Fe | Mo | Co | W | C | Mn | Si | B |
|---|---|---|---|---|---|---|---|---|---|
| 47^{a} | 22 | 18 | 9 | 1.5 | 0.6 | 0.10 | 1* | 1* | 0.008* |

| | | | | | | | | | |
|---|---|---|---|---|---|---|---|---|---|
| ^{a} As balance *Maximum | | | | | | | | | |

Other suppliers disclose for example the following ranges (in wt.%) for Hastelloy X:
- Carbon 0.05-0.15 (wrought); 0.20 max (cast)
- Silicon 1.00 max (wrought); 1.00 max (cast)
- Manganese 1.00 max (wrought); 1.00 max (cast)
- Chromium 20.5-23.0 (wrought); 20.5-23.0 (cast)
- Iron 17.0-20.0 (wrought); 17.0-20.0 (cast)
- Molybdenum 8.0-10.0 (wrought); 8.0-10.0 (cast)
- Cobalt 0.50-2.50 (wrought); 0.50-2.50 (cast)
- Tungsten 0.20-1.00 (wrought); 0.20-1.00 (cast)
- Nickel remainder

Nevertheless, it has been found by the applicant that the hot cracking susceptibility of SLM Hastelloy X strongly differs between powder batches from different suppliers. Using Hastelloy X powder with above described standard chemistry is therefore too broad for SLM processing.

Document D. Tomus et al: "Controlling the microstructure of Hastelloy-X components manufactured by selective laser melting", Lasers in Manufacturing Conference 2013, Physics Procedia 41 (2013), pages 823-827, describes that high concentration of minor elements such as Mn, Si, S and C can increase the susceptibility to crack initiation due to micro segregation at grain boundaries produced during solidification. According to that document crack initiation in Hastelloy X components manufactured by SLM can be avoided by decreasing the amount of minor alloying additions such as Mn and Si. Detailed values for the low resp. high content of those elements in the chemical composition of the tested material are not disclosed in that document.

Document WO 2013/162670 A2 discloses a method for manufacturing an airfoil, the method comprising forming an airfoil using a powdered Ni-based alloy in an additive manufacturing process, wherein the powdered Ni- based alloy includes (in wt. -%) 7.7 to 9.5 Mo, 0.06 to 0.08 Ti, 0.3 to 0.5 Al, 4.5 to 5.5 Nb, 0.02 to 0.04 C and a balance Ni and alloy elements. Alloying elements include for example 4.9 % Fe, 21 Cr and 0.14 Si. A preferred embodiment described in that patent application is a powdered Ni-based alloy consisting essentially of about (in wt. -%) 4.8 Fe, 21 Cr, 8.6 Mo, 0.07 Ti, 0.4 Al, 5.01 Nb, 0.03 C, 0.14 Si and a balance Ni. Said chemical alloy composition is based on the IN625 chemistry for electron beam melting. The airfoil, manufactured with that described method, exhibits a tensile ductility within the range of 33% to 38% at 1400 °F (760 °C).

Document WO 2014/120264 A1 describes a manufacturing process of a component, including additive manufacturing and precipitating carbides at grain boundaries of the component. Untreated samples of IN625 wrought alloy are compared to SLM-IN625 samples. The SLM-IN625 samples have significant lower tensile elongation values as well as stress rupture life time compared to the wrought IN625 samples in the temperature range between 1400 and 1700 °F (760 to 927 °C). As one reason for those results is mentioned the weaker grain boundaries in SLM-IN625 samples relative to the wrought IN625 samples. The SLM-IN625 grain boundaries are free of carbides that strengthen the wrought IN625 alloy. For solving this problem it is proposed in that document to add a heat treatment step, carried out after completion of the conventional heat treatment steps for additive-manufactured components and/or to use an increased carbon content alloy powder with more than 0.02 wt.-%, preferable 0.03 to 0.04 wt.-% C and/or to apply the additive manufacturing with a carburizing gas injection during the additive manufacturing process.

Document EP 2 886 225 A1 describes a Nickel-base superalloy powder with high gamma-prime precipitation content for additive manufacturing (SLM, EBM) of three-dimensional articles with a reduced hot cracking tendency and discloses suitable process parameter for manufacturing such an article. The modified composition of the powder according to that document is based on known commercially available Inconel 738 (IN738LC) powder with a specification of (in wt. -%): 15.7-16.3 Cr, 8.0-9.0 Co, 1.5-2.0 Mo, 2.4-2.8 W, 1.5-2.0 Ta, 3.2-3.7 Al, 2.2-3.7 Ti, 0.6-1.1 Nb, 0.09-0.13 C, 0.007-0.012 B, 0.03-0.08 Zr, max. 0.3 Si, remainder Ni and unavoidable residual elements (impurities). A powder size distribution between 10 and 100 µm and a spherical morphology is used. By a tight control and modification of specific minor/trace elements (0.004≤Zr<0.03 wt. -% and 0.001≤Si<0.03 wt. -%) in the modified IN738LC alloy powder with the above-mentioned powder size distribution and morphology of the powder crack free or at least nearly crack free components can be produced by SLM without preheating. It was found that the known limitation of maximal 0.3 wt. -% Si and maximal 0.08 wt. -% Zr for commercially available IN738LC powder is too high for use of this powder in powder based additive manufacturing, like SLM or EBM.

### SUMMARY OF THE INVENTION

It is an object of the present invention to provide a solid-solution strengthened Nickel-base superalloy powder for use of additive manufacturing (SLM, EBM) of three-dimensional articles with a reduced hot cracking tendency and sufficient high temperature ductility.

The modified composition of the powder according to the present invention is based on known commercially available Hastelloy X powder and consists of (in wt. - %): 20.5-23.0 Cr, 17.0-20.0 Fe, 8.0-10.0 Mo, 0.50-2.50 Co, 0.20-1.00 W, 0.04-0.10 C, 0-0.5 Si, 0-0.5 Mn, 0-0.008 B, remainder Ni and unavoidable residual elements (impurities). The object of the present invention is realized by a powder composition according to claim 1 with a powder size distribution between 10 and 100 µm and a spherical morphology and with a ratio of the content (in wt.-%) of alloying elements C/B ≥ 5.

The core of the invention is that by a tight control and modification of specific minor elements (0.04≤C≤0.1 wt. -%, 0≤Si≤0.5 wt. -%, 0≤Mn≤0.5 wt. -%, 0≤B≤0.008 wt. -%, with C/B≥ 5) of the powder composition and with the above-mentioned powder size distribution and morphology of the powder crack free or at least nearly crack free components with a sufficient high temperature ductility can be produced by SLM or other powder based additive manufacturing methods without preheating.

It was found that the known limitation of maximal 1.00 wt. -% Si and maximal 1.00 wt. -% Mn for commercially available Hastelloy X powder is too high for use of this powder in powder based additive manufacturing, like SLM or EBM. In addition, because of the finer grain structure in SLM- processed articles compared to cast or wrought articles it is necessary to add sufficient amounts of carbon and of boron in the disclosed ratio to strengthen the grain boundaries. Only the unique simultaneous reduction in Si, Mn content and the tight control in C and B content allow the crack-free processing of the modified Hastelloy X combined with sufficient high temperature mechanical strength and ductility.

In preferred embodiments the C content of the powder is 0.05-0.09, more preferable 0.05-0.08 wt. -%.

According to further embodiments of the invention the B content of the powder is 0.002-0.008 wt. -% or ≤0.007 wt. -%,

It is an advantage if the Si content is max. 0.2 wt. -%, more preferred max. 0.1 wt. -%.

According to a further preferred embodiment of the invention the Mn content of the powder is max. 0.3, more preferred max. 0.1 wt.-%.

### BRIEF DESCRIPTION OF THE DRAWINGS

The present invention is now to be explained more closely by means of different embodiments and with reference to the attached drawings.
- Fig. 1: shows the microstructure of four SLM processed samples made of powders A to D showing improving metallurgical quality dependent on content of Si, Mn, B and C;
- Fig. 2: shows the tensile ductility of SLM-processed Hastelloy X specimens with different carbon content.

### DETAILED DESCRIPTION OF DIFFERENT EMBODIMENTS OF THE INVENTION

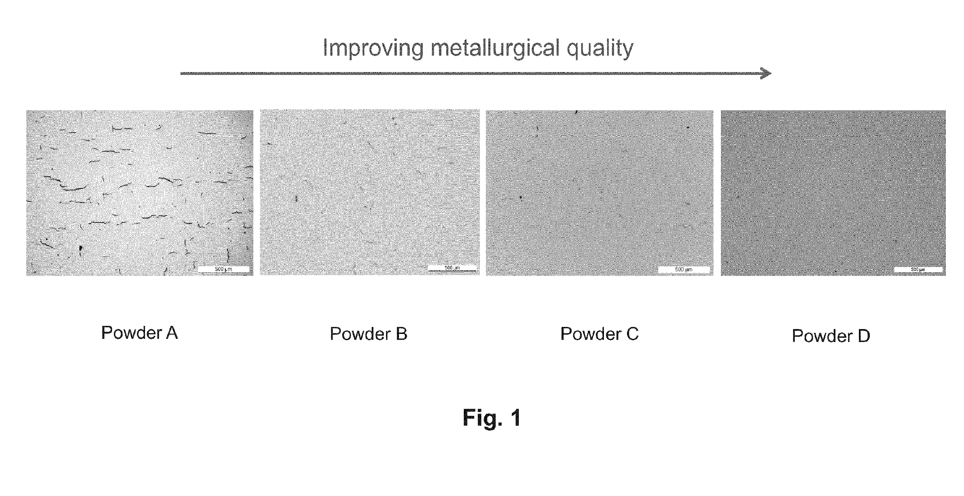

Fig. 1 shows the microstructure of four SLM test samples (three-dimensional articles) made of modified Hastelloy X powders A, B, C, and D according to Table 2. All samples were processed with the same SLM process parameters.

Table 2 discloses the amount of C, Si, Mn and B in four powders A-D (in wt. - %) and the nominal amounts of those elements for Hastelloy X. The content of the other alloying elements as well as the Ni content (balance to 100 wt. -%, including unavoidable residual elements) is nearly equal in the four powders and meets the nominal chemical composition of Hastelloy X as described in Table 1, which is inserted here once more for a better overview:

**Table 1: Nominal chemical composition of Hastelloy X**

| Ni | Cr | Fe | Mo | Co | W | C | Mn | Si | B |
|---|---|---|---|---|---|---|---|---|---|
| 47^{a} | 22 | 18 | 9 | 1.5 | 0.6 | 0.10 | 1* | 1* | 0.008* |

| | | | | | | | | | |
|---|---|---|---|---|---|---|---|---|---|
| ^{a} As balance *Maximum | | | | | | | | | |

**Table 2: Amounts (in wt. -%) of C, Mn, S and B in the chemical composition of several testet alloys (powders A -D) and of Hastelloy X (according to the state of the art)**

| **Material** | **Hastelloy X (nominal)** | **Powder A** | **Powder B** | **Powder C** | **Powder D** |
|---|---|---|---|---|---|
| **Element** | | | | | |
| **C** | 0.10 | 0.04 | 0.06 | 0.05 | 0.035 |
| **Mn** | max. 1 | 0.7 | 0.2 | 0.1 | 0.03 |
| **Si** | max. 1 | 0.5 | 0.3 | 0.1 | 0.07 |
| **B** | max. 0.008 | - | - | 0.008 | 0.002 |

As can be clearly seen in the micrographs of the four samples (Fig. 1) there is a significant quality improvement from left (powder A) to right (powder D). This is in correlation with the reduction of Si and Mn of about one order of magnitude.

Although the metallurgical quality in SLM-processed powder D is higher compared to powder C due to the lower crack density, the high temperature ductility values are significant lower.

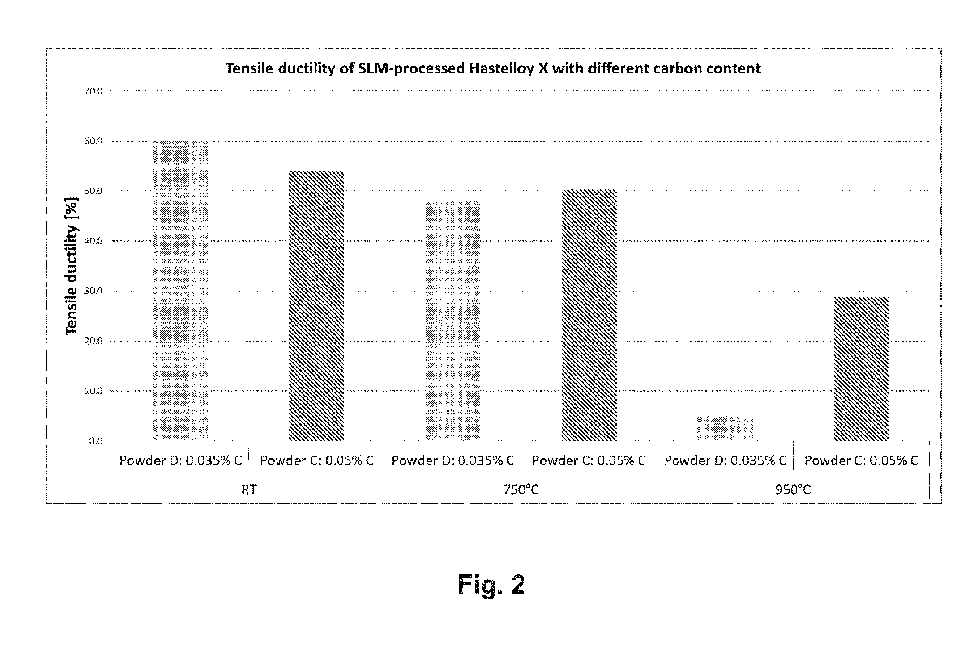

This is illustrated in Fig. 2 which shows the results of tensile testing fo fully-heat treated SLM-processed Hastelloy X samples with different carbon content. The tensile elongation of SLM processed powder D and SLM processed powder C specimens (with different C and B content) is shown for three test temperatures (RT= room or ambient temperature, 750 °C and 950 °C). While on RT the specimen made of powder C with a higher carbon (and boron) content has sligtly lower tensile ductility than the specimen made of powder D. This effect turns at a test temperature of about 750 °C. But in general, the properties are nearly comparable, no significant differences with respect to tensile eleongation up to 750 °C could be measured. Above a testing temperature of 750 °C the tight control of C and B is crucial, because the impact of carbon and boron content on the ductility is significant. For instance, 0.035 wt.-% containing SLM processed Hastelloy X samples have tensile ductilities of <8% at 950 °C, whereas SLM-processed Hastelloy X samples with carbon content of about 0.05 wt. -% have ductility values of about 28%.

An additional Hastelloy X powder with a carbon content of <0.01 wt.-% was delivered from a machine supplier who optimised the composition for their SLM machines. But it could be shown that such a SLM processed sample has only a ductility of 7 % at 950 °C. In general, using Hastelloy X powder with a carbon content lower than 0.04 wt.-% gives only low mechanical properties at temperatures >800°C.

The core of the invention is that by a tight control and modification of specific minor elements (0.04≤C≤0.1 wt. -%, 0≤Si≤0.5 wt. -%, 0≤Mn≤0.5 wt. -%, 0≤B≤0.008 wt. -%, with C/B≥ 5) of the powder composition of Hastelloy X (with in wt.-%: 20.5-23.0 Cr, 17.0-20.0 Fe, 8.0-10.0 Mo, 0.50-2.50 Co, 0.20-1.00 W, remainder Ni and unavoidable residual elements) and with a powder size distribution between 10 and 100 µm and a spherical morphology of the powder grains crack free or at least nearly crack free components with a sufficient high temperature ductility (>800°C) can be produced by SLM or other powder based additive manufacturing methods.

Only the unique simultaneous reduction in Si, Mn content and the tight control in C and B content combined with the disclosed powder size distribution and morphology of the powder grains allow the crack-free processing of the modified Hastelloy X with sufficient high temperature mechanical strength and ductility.

Of course, the invention is not limited to the decribed embodiments. For example, it is expected that the disclosed nickel-base superalloy powder is applicable not only for SLM manufacturing process, but also for EBM manufacturing process with the described advantages.

## Claims

1. Nickel-base superalloy powder for additive manufacturing of three-dimensional articles consisting of the following chemical composition (in wt. -%): 20.5-23.0 Cr, 17.0-20.0 Fe, 8.0-10.0 Mo, 0.50-2.50 Co, 0.20-1.00 W, 0.04-0.10 C, 0-0.5 Si, 0-0.5 Mn, 0-0.008 B, remainder Ni and unavoidable residual elements and wherein the powder has a powder size distribution between 10 and 100 µm and a spherical morphology and the ratio of the content (in wt.-%) of alloying elements C/B is at least 5 or more.

2. Nickel-base superalloy powder according to claim 1, **characterized in that** the C content of the powder is 0.05-0.09 wt. -%.

3. Nickel-base superalloy powder according to claim 2, **characterized in that** the C content is 0.05-0.08 wt. -%.

4. Nickel-base superalloy powder according to claim 1, **characterized in that** the Si content is max. 0.2 wt. -%.

5. Nickel-base superalloy powder according to claim 4, **characterized in that** the Si content is max. 0.1 wt. -%.

6. Nickel-base superalloy powder according to claim 1, **characterized in that** the Mn content is max. 0.3 wt. -%.

7. Nickel-base superalloy powder according to claim 6, **characterized in that** the Mn content is max.0.1 wt. -%.

8. Nickel-base superalloy powder according to claim 1, **characterized in that** the B content is 0.002-0.008 wt. -%.

9. Nickel-base superalloy powder according to claim 1, **characterized in that** the B content is ≤ 0.007 wt. -%.
